# EUROPEAN PATENT SPECIFICATION

(11) **EP 1 803 946 B1**
(45) Date of publication and mention of the grant of the patent: **17.06.2015**
(21) Application number: 06126966.8
(22) Date of filing: 22.12.2006
(51) Int. Cl.: F16C 7/02, F16C 9/04

(54) **Procedure for machining an engine connecting rod small end and connecting rod obtained therefrom**
Bearbeitungsverfahren für ein kleines Ende einer Pleuelstange und damit hergestellte Pleuelstange
Procédé d'usinage d'une petite extrémité de tige de connexion de moteur et tige de connexion ainsi obtenue

(30) Priority: 27.12.2005 IT MI20052487
(43) Date of publication of application: 04.07.2007
(73) Proprietor: FPT Industrial S.p.A., 10156 Torino (TO) (IT)
(72) Inventor: Montevecchi, Luca, 10135 Torino (IT); Affatigato, Fabio, 10122 Torino (IT)
(74) Representative: Franzolin, Luigi

(56) References cited:
- WO-A1-2006/054140
- WO-A1-2006/054142
- DE-C1- 19 744 713
- JP-A- 2003 343 723

## Description

The present invention relates to a procedure for machining an engine connecting rod small end and connecting rod obtained therefrom.

The most common shape for a connecting rod small end is that known as "viper head", a trapezoidal or tapered form. In order to make such form, the bush bearing coupling with the piston is first shaped and then driven into the small end of the connecting rod in turn shaped to form a "viper head", as a last stage, after having made the cut in the terminal part of the "viper head" connecting rod.

In order to maximise the resistant section of the piston in the area where it is subject to the greatest stress, a connecting rod small end is made with a "stepped" or concave shape optimised in order to make it possible to maximise the resistant section of the piston in the area where it is most stressed.

The machining process of the connecting rod small end described above for the "viper head" form is not applicable in the case of a connecting rod with a stepped or concave small end. In actual fact, for the driving, a housing bevel is made on the bearing, which in the case of a stepped or concave form would cause difficult to overcome manufacturing difficulties.

WO 2006-054140 and WO 2006-054142, intermediate documents, relate to methods for machining an engine connecting rod small end. Such methods comprise the step of inserting the bush in the eye of the small end before of cutting the small end in order to machine together, the bush and the small end, by achieving a desired shape.

DE19744713 discloses a method for producing a connecting rod, by means of which the lubricating-oil pockets can be produced with at least essentially any desired cross-sectional contour in a simple way.

The purpose of this invention is therefore to indicate a machining procedure of the connecting rod small end able to constructively make the connecting rod small end in the best possible "stepped" or concave form from the resistant section of the piston point of view.

The subject of the present invention is a procedure for machining an engine connecting rod small end comprising the following steps in succession:
- first machining of the interior of the connecting rod small end with constant profile, and cylindrical internal small end surface,
- driving a bush bearing into the connecting rod small end,
- second machining of said small end to a stepped or concave shape.

A further subject of the invention is the connecting rod obtained with such procedure.

The specific subject of the present invention is a procedure for machining an engine connecting rod small end and connecting rod obtained therefrom, as described in greater detail in the claims, which form an integral part of the present description.

Further purposes and advantages of the present invention will be evident in view of the detailed description of one embodiment thereof and the appended drawings given by way of a non-limiting example, wherein:
figures 1a, 1b, 1c illustrate side sections of the connecting rod, which illustrate the results of the machining process in accordance with the present invention;
figures 2a, 2b, 2c illustrate side views of the connecting rod corresponding to the machining phases of figures 1a, 1b, 1c.

In the figures, the same numbers identify the same elements.

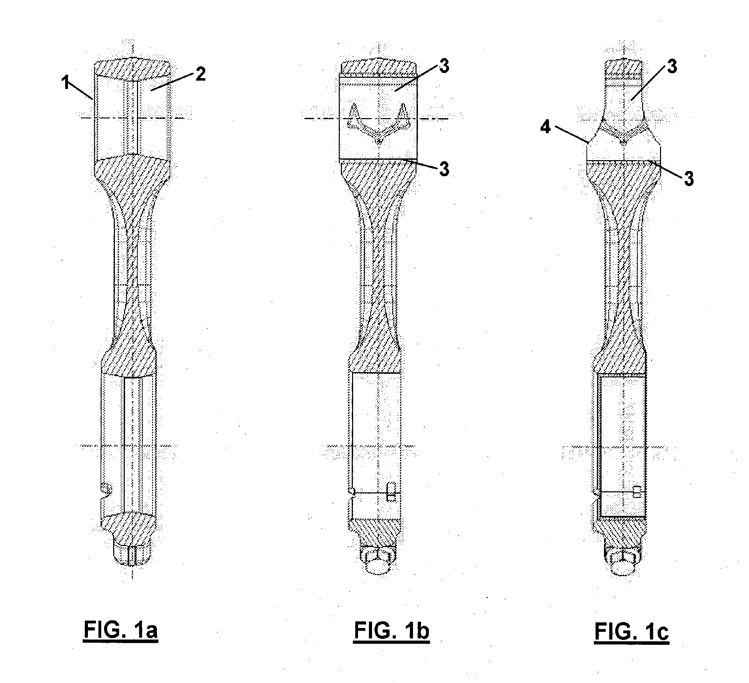

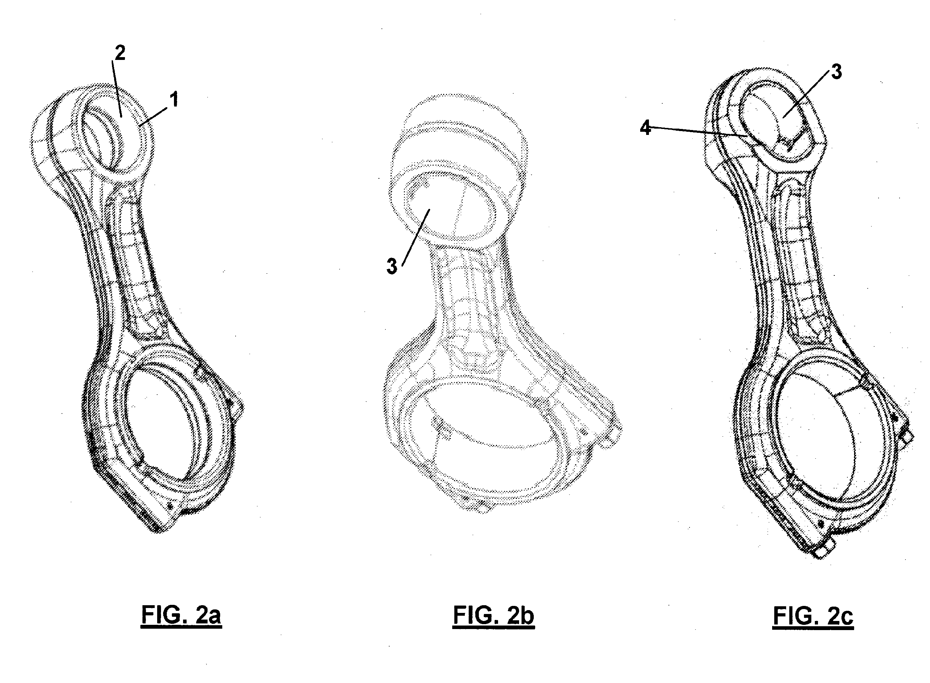

In accordance with the main aspect of the invention, the bush bearing is driven into the small end of the connecting rod before the stepping or concave machining. The procedure in accordance with the present invention envisages the following steps:
- making of the raw connecting rod, figures 1a and 2a, with the contours of the small end 1 to be trimmed, with an irregular internal surface 2.
- machining of the interior of the connecting rod small end with constant profile, figures 1 band 2b, thus obtaining a cylindrical internal small end surface, and driving of the cylindrical bush bearing 3 into the small end.
- machining of the connecting rod small end, figures 1c and 2c, with cut to make the terminal part of the connecting rod 4 "stepped" or concave. The bush bearing 3 is also cut and trimmed together with the connecting rod, thus obtaining the same shape for both with a single machining step.

The connecting rod and bush may be made with any known material useful for the purpose.

Those skilled in the art will be able to make variants to the non-limiting example described, all of which being contemplated within the scope of protection of this invention.

The advantages deriving from the application of the present invention are evident. In this way it is possible to have greater freedom in the engineering of the connecting rod small end shape thanks to a more precise and controllable process.

Using the description given above, those skilled in the art are able to realise the object of the invention, without introducing further construction details.

## Claims

1. Procedure for machining an engine connecting rod small end, consisting of the following steps in succession:
- making of the raw connecting rod, with the contours of the small end (1) to be trimmed, with an irregular internal surface (2),
- machining of the interior of the connecting rod small end with constant profile, and cylindrical internal small end surface (2)
- driving a bush bearing (3) into the connecting rod small end (1),
- cutting and trimming of the bush bearing together with the connecting rod of said small end (1) to a stepped or concave shape.

## Patentansprüche

1. Verfahren zum Bearbeiten des kleinen Endes einer Kraftmaschinenpleuelstange, das aus den folgenden aufeinander folgenden Schritten besteht:
- Herstellen der rohen Pleuelstange, wobei die zuzuschneidenden Umrisse des kleinen Endes (1) eine unregelmäßige innere Oberfläche (2) aufweisen,
- Bearbeiten der Innenseite des kleinen Endes der Pleuelstange mit konstantem Profil und einer zylindrischen inneren Oberfläche (2) des kleinen Endes,
- Treiben eines Buchsenlagers (3) in das kleine Ende (1) der Pleuelstange,
- Abschneiden und Zuschneiden des Buchsenlagers zusammen mit der Pleuelstange des kleinen Endes (1) in eine gestufte oder konkave Form.

## Revendications

1. Procédure pour usiner un pied de bielle de moteur, constituée des étapes suivantes en succession :
- la fabrication de la bielle à l'état brut, avec les contours du pied (1) devant être taillés, avec une surface interne irrégulière (2),
- l'usinage de l'intérieur du pied de bielle avec un profil constant, et une surface de pied interne cylindrique (2)
- l'enfoncement d'un palier à douille (3) dans le pied de bielle (1),
- la coupe et le taillage du palier à douille conjointement avec la bielle dudit pied (1) en une forme étagée ou concave.
